# EUROPEAN PATENT APPLICATION

(11) **EP 4 488 318 A1**
(43) Date of publication of application: **08.01.2025**
(21) Application number: 23763361.5
(22) Date of filing: 24.02.2023
(51) Int. Cl.: C08J 3/20, C08J 5/04, C08J 5/24

(54) **METHOD FOR PRODUCING CARBON FIBER BUNDLE COMPOSITE, AND CARBON FIBER BUNDLE COMPOSITE**

(30) Priority: 04.03.2022 JP 2022033126; 11.11.2022 JP 2022180699
(71) Applicant: Mitsubishi Chemical Corporation, Tokyo 100-8251 (JP)
(72) Inventor: IKEDA, Masashi, Tokyo 100-8251 (JP); TSUJIKAWA, Kazuki, Tokyo 100-8251 (JP); ISHIKAWA, Takeshi, Tokyo 100-8251 (JP); MATSUI, Jun, Tokyo 100-8251 (JP)
(74) Representative: Vossius & Partner Patentanwälte Rechtsanwälte mbB
(86) International application number: PCT/JP2023/006757
(87) International publication number: WO 2023/167102

(57) **Abstract**

A method for producing a carbon fiber bundle composite comprising: mixing carbon fiber fluff made of short carbon fibers and a molten resin containing an epoxy resin component to obtain a carbon fiber bundle containing the molten resin, solidifying the molten resin contained in the carbon fiber bundle, and mixing at least one type of epoxy curing agent into the molten resin. A carbon fiber bundle composite comprising a plurality of short carbon fibers forming a bundle and an uncured solid epoxy resin composition, wherein the positions of the tips of the plurality of short carbon fibers are uneven at each end of the bundle, and the uncured solid epoxy resin composition contains at least one type of epoxy curing agent.

## Description

### Technical Field

The present invention mainly relates to a method of producing a carbon fiber bundle composite (carbon-fiber bundle composite) and a carbon fiber bundle composite.

### Background Art

CFRP (Carbon Fiber Reinforced Plastic), which is a fiber-reinforced plastic using carbon fiber as a reinforcement, is a lightweight material with excellent mechanical properties suitable for parts of automobiles, ships, railcars, manned aircrafts, unmanned aircrafts and other transportation equipment. The importance of CFRP has been increasing in recent years.

Carbon fiber sheet molding compound (CF-SMC) is one of the intermediate molding materials used in the production of CFRP products. CF-SMC is a carbon fiber mat formed by cutting a continuous carbon fiber bundle into chopped carbon fiber bundles and scattering them onto a carrier film, which is then impregnated with a thermosetting resin matrix (for example, Patent Literature 1).

In general, CFRP molded from CF-SMC using a chopped carbon fiber bundle having a smaller bundle sizes exhibits higher strength. On the other hand, the larger the bundle size of a continuous carbon fiber bundle, the higher the production efficiency. Under these circumstances, a technique has been developed in which a continuous carbon fiber bundle called a large tow, which has a large bundle size such as 48K, is divided into a tow (fiber bundle) having a smaller bundle size. (Patent Literature 2)

It has been proposed to produce a carbon fiber-reinforced thermoplastic by adding a carbon fiber pellet to a thermoplastic resin. The carbon fiber pellet is produced by mixing wet-cut short carbon fibers with a solution or suspension of a sizing agent to form a carbon fiber aggregate, pelletizing this with a disc pelletizer, and then drying it. (Patent Literature 3)

It is known that a needle-shaped self-assembled carbon fiber bundle (self-assembled carbon fiber bundle) is produced by dispersing short carbon fibers in water, adding a small amount of chloroform, and shaking vigorously. It is also known that polyetherimide can be carried on this needle-shaped self-assembled carbon fiber bundle by having dissolved polyetherimide in this chloroform. (Non-Patent Literature 1)

### Citation List

### Patent Literature

PTL 1: JPH1-163218A
PTL 2: U.S. Patent No. 6385828
PTL 3: JPH10-503812A

### Non Patent Literature

NPTL 1: J. R. Baxter, G. R. Palmese, N. J. Alvarez, Applied Materials Today, 20 (2020) 100786

### Summary of Invention

### Technical Problem

One of the objects of the present invention is to provide a novel prepreg material that can be easily produced from short cut carbon fibers, which may be virgin carbon fibers or recycled carbon fibers.

Another object of the present invention is to provide a new method for producing prepreg materials using short cut carbon fibers as reinforcement materials.

This specification may explicitly or implicitly indicate problems that can be solved by each embodiment of the present invention.

### Solution to Problem

According to one aspect of the present invention, there is provided a method for producing a carbon fiber bundle composite comprising: mixing carbon fiber fluff made of short carbon fibers and a molten resin containing an epoxy resin component to obtain a carbon fiber bundle containing the molten resin, solidifying the molten resin contained in the carbon fiber bundle, and mixing an epoxy curing agent into the molten resin.

According to another aspect of the present invention, there is provided a carbon fiber bundle composite comprising a plurality of short carbon fibers forming a bundle and an uncured solid epoxy resin composition. The positions of the tips of the plurality of short carbon fibers in the carbon fiber bundle composite are uneven at each end of the bundle, and the uncured solid epoxy resin composition contains at least one type of epoxy curing agent.

According to yet another aspect of the present invention, there is provided a carbon fiber bundle composite sheet obtained by fusing together a plurality of the carbon fiber bundle composites, and a method for producing the carbon fiber bundle composite sheet.

### Advantageous Effects of Invention

According to a preferred embodiment of the present invention, a prepreg material that can be suitably used as an intermediate material when producing CFRP products by various methods including compression molding is provided.

### Brief Description of Drawings

[Fig. 1] Fig. 1 is a conceptual diagram showing a producing apparatus for a carbon fiber bundle composite sheet.
[Fig. 2] Fig. 2 is a photograph showing a carbon fiber bundle composite having a shape close to a spindle shape.
[Fig. 3] Fig. 3 is a photograph showing a wire-shaped carbon fiber bundle composite.
[Fig. 4] Fig. 4 is a photograph showing a needle-shaped carbon fiber bundle composite.
[Fig. 5] Fig. 5 is a photograph showing a carbon fiber composite sheet.

### Description of Embodiments

The embodiments of the present invention will be described in detail below.

### 1. Producing method of carbon fiber bundle composite

One embodiment of the present invention relates to a method for producing a carbon fiber bundle composite (hereinafter sometimes abbreviated as "CBC").

This producing method includes mixing carbon fiber fluff made of short carbon fibers and a molten resin containing an epoxy resin component to obtain a carbon fiber bundle containing the molten resin, solidifying the molten resin contained in the carbon fiber bundle, and mixing an epoxy curing agent into the molten resin.

Hereinafter, explanation will be made on the method for producing CBC according to the embodiment including an embodiment of a method using virgin carbon fiber as a starting material and an embodiment of a method using recycled carbon fiber as a starting material.

### 1.1. Method using virgin carbon fiber as a starting material

A method using virgin carbon fiber as a starting material typically includes the following steps (i) to (iv).
(i) Chopping process
(ii) Loosening process
(iii) Bundling process
(iv) Cooling process

The details of each step will be explained below.

### (i) Chopping process

In the chopping process, a continuous carbon fiber bundle made of virgin carbon fibers is cut at predetermined intervals in the fiber direction using, for example, a rotary cutter to obtain a chopped carbon fiber bundle.

The bundle size of the continuous carbon fiber bundle (the number of carbon fiber filaments constituting the bundle) is, for example, 10K or more, and may be 12K or more, 15K or more, 24K or more, 36K or more, 48K or more, or 50K or more. Although there is no particular upper limit to the bundle size, it is, for example, 100K or less.

"K" here is a symbol representing 1000. For example, 1K means 1000 and 10K means 10000.

The larger the bundle size of the continuous carbon fiber bundle, the greater the number of carbon fiber filaments contained in one chopped carbon fiber bundle, so the production efficiency of CBC becomes higher. In addition, the cost of producing continuous carbon fiber bundles also decreases with increasing bundle size. Therefore, the bundle size of the continuous carbon fiber bundle is preferably 24K or more, more preferably 36K or more, and even more preferably 48K or more.

The diameter of the carbon fiber filament is generally in the range of 5 µm to 15 µm for a PAN-based carbon fiber made from polyacrylonitrile fiber.

The fiber length of the chopped fiber bundle is set to the length required for the carbon fibers constituting the CBC to be produced. This is because there is no process of intentionally cutting the carbon fibers after the chopping process.

Although the fiber length of the chopped fiber bundle is not limited, it is, for example, 3 mm or more, and may be 5 mm or more, or 10 mm or more. Although the fiber length of the chopped fiber bundle is not limited, it is, for example, 60 mm or less, and may be 50 mm or less, 40 mm or less, 30 mm or less, or 20 mm or less.

The bundle length of the CBC formed from a plurality of short carbon fibers having a same fiber length, in other words, the dimension in the fiber direction is equal to or greater than the fiber length of the short carbon fibers.

### (ii) Loosening process

In the loosening process, carbon fiber fluff is obtained by loosening the chopped carbon fiber bundles obtained in the chopping process and making them fluffy.

The loosening is preferably performed so that all of the carbon fibers contained in the chopped carbon fiber bundle become monofilament-like, but this is not essential. That is, the carbon fiber fluff obtained in the loosening process may include thin carbon fiber bundles consisting of a small number of filaments, for example, less than 100 filaments.

A common loosening machine can be used in the loosening process. The loosening machine used is not limited.

In one example, the loosening can be carried out by putting only the chopped carbon fiber bundles into an agitation mixer such as a Henschel mixer and stirring them in a dry state. This method has the advantage that it is possible to proceed to the next bundling process without taking out the fluffy carbon fiber from the agitation mixer.

In one example, the chopped carbon fiber bundles can also be loosened by dipping them in an organic solvent, such as acetone, that can dissolve the sizing agent contained in the chopped carbon fiber bundles, and then irradiating them with ultrasonic waves. After washing off the sizing agent, carbon fiber in fluffy form remains.

In a preferred example, the carbon fiber fluff contains no carbon fiber having a fiber length of less than 3 mm, or even when such a carbon fiber is contained therein, its content is less than 5 wt% based on the total carbon fibers contained in the carbon fiber fluff.

In a more preferred example, the carbon fiber fluff contains no carbon fiber having a fiber length of less than 5 mm, or even with such a carbon fiber is contained therein, its content is less than 5 wt% based on the total carbon fibers contained in the carbon fiber fluff.

In an even more preferred example, the carbon fiber fluff contains no carbon fiber having a fiber length of less than 10 mm, or even with such a carbon fiber is contained therein, its content is less than 5 wt% based on the total carbon fibers contained in the carbon fiber fluff.

### (iii) Bundling process

In the bundling process, the carbon fiber fluff obtained in the loosening process is mixed with a bundling liquid. The carbon fiber filaments constituting the carbon fiber fluff or thin carbon fiber bundles are aggregated by capillary force based on the surface tension of the bundling liquid to form a carbon fiber bundle containing the bundling liquid.

A molten resin containing an epoxy resin component is used as the bundling liquid. The molten resin corresponds to a melt of a solid resin, but does not need to be prepared through a process of melting a solid resin. That is, the molten resin, which is in a melted state at the time of preparation, may be used as it is as the bundling liquid.

In this specification, a solid resin means a resin that is solid state at least at a temperature within the range of 15 to 25°C (so-called room temperature).

In this specification, for convenience, when a noncrystalline resin or resin composition has a viscosity of 100,000 Pa·s or more, it is considered to be a "solid." Furthermore, if the viscosity increases to 100,000 Pa·s without crystallization when the temperature of the molten resin is lowered, this is considered to be "solidification".

This viscosity is a value measured using a rotational viscometer (for example, HAAKE MARS 40 manufactured by Thermo Fisher Scientific) under the following conditions.
Measurement mode: constant stress
Stress value: 300Pa
Frequency: 1.59Hz
Plate diameter: 25mm
Plate type: parallel plate
Plate gap: 0.5mm

The molten resin containing an epoxy resin component means, in other words, that the epoxy resin is blended into the molten resin.

When a compound having one or two or more epoxy groups per molecule is called an epoxy compound, an epoxy resin is generally a mixture containing multiple types of epoxy compounds, and has more than one epoxy group per molecule on average.

One or two or more epoxy resins may be blended into the molten resin.

Examples of epoxy resin that can be blended into the molten resin include, but are not limited to, glycidyl ether type, glycidyl amine type, glycidyl ester type, and alicyclic type epoxy resins.

Glycidyl ether type epoxy resin is an epoxy resin obtained by a reaction of a compound having a hydroxyl group and epichlorohydrin. Examples of glycidyl ether type epoxy resin include, but are not limited to, bisphenol A type epoxy resin, bisphenol F type epoxy resin, bisphenol S type epoxy resin, resorcinol type epoxy resin, phenol novolac type epoxy resin, trisphenolmethane type epoxy resin, aryl glycidyl ether type epoxy resins including biphenol (biphenyl) type, benzophenone type, fluorene type, naphthalene type and anthracene type, and alicyclic polyhydric alcohol polyglycidyl ether type epoxy resins, and the like.

Glycidylamine type epoxy resin is an epoxy resin obtained by a reaction of a compound having an amino group and epichlorohydrin. Examples of glycidylamine type epoxy resins include, but are not limited to, tetraglycidyldiaminodiphenylmethane type epoxy resin, triglycidylaminophenol type epoxy resin, triglycidylaminocresol type epoxy resin, diglycidylaniline type epoxy resin, tetraglycidyl metaxylenediamine type epoxy resin, and the like.

Examples of glycidyl ester type epoxy resin include, but are not limited to, polyglycidyl esters of polyvalent carboxylic acid such as diglycidyl esters of phthalic acid, isophthalic acid, terephthalic acid, tetrahydrophthalic acid or hexahydrophthalic acid.

In one example, an epoxy resin containing an oxazolidone ring may be blended into the molten resin. Alternatively, an isocyanate compound may be blended into the molten resin so that an oxazolidone ring is formed.

Examples of alicyclic type epoxy resin include, but are not limited to epoxy resins obtained by epoxidizing compounds having multiple cycloalkene skeletons with peracetic acid or the like; and epoxy resins obtained by prepolymerizing bifunctional cycloalkene oxides having polymerizable functional groups such as (meth)acrylic group and allyl group.

The solidification temperature of the molten resin is, for example, within the range of 30°C to 150°C, and may be within the range of 40°C to 100°C.

The viscosity of the molten resin when used as a bundling liquid is preferably 10 Pa·s or less, more preferably 5 Pa·s or less, 3 Pa·s or less. It may be 2P·s or less, 1 Pa·s or less, and the like. Although there is no particular lower limit to this viscosity, it is, for example, 0.01 Pa·s or more, and may be 0.1 Pa·s or more.

The form of the carbon fiber bundle formed by the action of the bundling liquid can change depending on the viscosity of the bundling liquid. Therefore, the greater the temperature dependence of the viscosity of the molten resin used as the bundling liquid, the more stringent temperature control is required in the bundling process.

This viscosity is a value measured using a rotational viscometer (for example, HAAKE MARS 40 manufactured by Thermo Fisher Scientific) under the following conditions. However, for a viscosity value of less than 1 Pa·s, there is no practical problem in substituting a value measured using a B-type rotational viscometer, which is known to be easy to handle.
Measurement mode: constant stress
Stress value: 300Pa
Frequency: 1.59Hz
Plate diameter: 25mm
Plate type: parallel plate
Plate gap: 0.5mm

The solidification temperature of the molten resin and the viscosity during melting can be controlled by the type and content of the epoxy resin blended into the molten resin.

In a preferred embodiment, the molten resin is a melt of an epoxy resin having a melting point. An epoxy resin having a melting point has a low viscosity in a liquid state and has low temperature dependence of the viscosity, so it is easy to use as a bundling liquid.

Epoxy resins having a melting point have a monomer having a rigid skeleton, often have a molecular weight of 1000 or less, and usually have a low oligomer content.

Whether or not the epoxy resin has a melting point can be simply confirmed by normal DSC measurement.

The amount of the molten resin mixed with the carbon fiber fluff may be, for example, 25 to 150 parts by weight based on 100 parts by weight of the carbon fiber fluff. By mixing thoroughly, a large number of isolated carbon fiber bundles that are not bonded to each other are formed.

The number of carbon fiber filaments constituting one carbon fiber bundle may be, for example, 1 to 20K, but is not limited.

There is no limit to the method of mixing the carbon fiber fluff and the molten resin, but stirring is preferred for efficient mixing in a short time.

For stirring, an agitation mixer for powder known as a Henschel mixer can be preferably used. The agitation mixer may be of a type comprising only an agitator blade (stirring blade), or may be of a type with a chopper attached. In an agitation mixer with jacket, the temperature of the stirring tank can be adjusted by flowing a heat medium inside the jacket.

By preheating the stirring tank before charging the carbon fiber fluff, it is possible to maintain the temperature at which the viscosity of the molten resin falls within the above mentioned preferred range.

The preheating of the carbon fiber fluff before charging into the stirring tank can be performed arbitrarily. The stirring tank is preferably heated to a temperature such that the viscosity of the molten resin falls within the above mentioned preferred range, before charging the carbon fiber fluff into the stirring tank.

The temperature of the molten resin is preferably adjusted so that the viscosity is within the above mentioned preferred range before charging into the stirring tank. In other examples, a molten resin may be obtained by heating and melting a solid resin in a stirred tank. In this case, the temperature of the molten resin can be adjusted in the stirring tank so that the viscosity is within the above mentioned preferred range.

An epoxy curing agent is mixed into the molten resin. The timing at which the epoxy curing agent is mixed with the molten resin is preferably before the molten resin and the carbon fiber fluff are mixed, or at the same time as the molten resin and the carbon fiber fluff are mixed.

The epoxy curing agent, which is liquid at the temperature when the molten resin is mixed with the carbon fiber fluff, is preferably mixed into the molten resin before mixing the molten resin and the carbon fiber fluff.

The epoxy curing agent, which is solid at the temperature when the molten resin is mixed with the carbon fiber fluff, is preferably mixed into the molten resin before mixing the molten resin and the carbon fiber fluff, or at the same time as the mixing of the molten resin and the carbon fiber fluff.

When mixing the epoxy curing agent into the epoxy resin at the same time as mixing the molten resin and the carbon fiber fluff, it is preferable that the carbon fiber fluff and the epoxy curing agent are mixed first, and then the molten resin is added to the resulting mixture and further mixed.

When using two or more types of epoxy curing agents, all of them may be mixed with the molten resin at the same timing, or one part and the other part may be mixed with the molten resin at different timings.

The epoxy curing agent mixed into the molten resin can be selected from common epoxy curing agents such as dicyandiamides, phenols including novolacs, amines, carboxylic acid anhydrides, thiols, imidazoles, and the like.

When no epoxy curing agent is mixed, the viscosity of the molten resin decreases as the temperature increases. When an epoxy curing agent is mixed, the same tendency is exhibited until the curing reaction starts due to the action of the epoxy curing agent, but once the curing reaction starts, the viscosity of the molten resin increases rapidly. Therefore, the epoxy curing agent to be mixed with the molten resin must be one that does not start a curing reaction immediately after mixing with the molten resin that has been heated until its viscosity has decreased to a level that allows it to be used as a bundling liquid.

As can be understood from this, the lower the solidification temperature of the molten resin, the wider the range of usable epoxy curing agents. From this viewpoint, the solidification temperature of the molten resin is preferably 120°C or lower, more preferably 100°C or lower, even more preferably 90°C or lower, and may be 80°C or lower, 70°C or lower, or 60°C or lower.

Epoxy curing agents that can be preferably used are these called latent curing agents. The latent curing agent is a solid having low solubility in epoxy resin at room temperature, but it has a property of melting or dissolving in the epoxy resin when heated to a predetermined temperature and exhibiting a function as a curing agent. This predetermined temperature varies depending on the type of latent curing agent. Some latent curing agents have a melting point of 100°C or higher, further 150°C or even 200°C or higher, and these are epoxy curing agents that can be particularly preferably used in the producing method according to the embodiment.

Various imidazoles, dicyandiamides, and boron trifluoride-amine complexes are typical examples of latent curing agents.

Imidazoles are compounds having an imidazole ring, and include substituted imidazoles in which the hydrogen atom of imidazole is substituted with a substituent, as well as imidazolium salts, imidazole complexes, and the like.

Preferred examples of substituted imidazole include substituted imidazoles having an aromatic ring which may be a heteroaromatic ring in the molecule, such as 2,4-diamino-6-[2'-methylimidazolyl-(1')]-ethyl-s-triazine, 2-phenyl-4-methylimidazole, 2-phenyl-4-methyl-5-hydroxymethylimidazole, 2-phenyl-4-benzyl-5-hydroxymethylimidazole, 2-phenyl-4,5-dihydroxymethylimidazole, 2-p-toluyl-4-methyl-5-hydroxymethylimidazole, 2-paratoluyl-4,5-dihydroxymethylimidazole, 2-methatoluyl-4-methyl-5-hydroxymethylimidazole, 2-methatoluyl-4,5-dihydroxymethylimidazole, 1-cyanoethyl-2-phenylimidazole, and the like.

Also imidazolium salts such as 1-cyanoethyl-2-ethyl-4-methylimidazolium trimellitate, 1-cyanoethyl-2-undecylimidazolium trimellitate, 1-cyanoethyl-2-phenylimidazolium trimellitate, and the like are suitable examples of imidazole-based latent curing agents.

Isocyanuric acid adducts of various substituted imidazoles such as 2-phenylimidazole, 2-methylimidazole, 2-phenyl-4,5-dihydroxymethylimidazole, 2-phenyl-4-methyl-5-hydroxymethylimidazole, and the like, especially isocyanuric acid adducts of substituted imidazoles having a triazine ring such as 2,4-diamino-6-(2'-methylimidazolyl-(1'))-ethyl-s-triazine, 1-(4,6-diamino-s-triazin-2-yl)ethyl-2-undecylimidazole, 2,4-diamino-6-[2-(2-ethyl-4-methyl-1-imidazolyl)ethyl]-s-triazine, and the like are particularly preferred examples of imidazole-based latent curing agents.

Amine adducts are also preferred examples of latent curing agents. Amine adducts are obtained by reacting imidazole and/or tertiary amine with epoxy resin and/or isocyanate to increase the molecular weight, and have relatively low solubility in epoxy resin.

The number of latent curing agents mixed in the molten resin may be one or two or more.

In one example, a curing accelerator may be mixed with the epoxy curing agent into the molten resin.

Examples of curing accelerator that can be preferably used in combination with dicyandiamide as an epoxy curing agent include urea derivatives such as 4,4'-methylenebis(phenyldimethylurea), 2,4-bis(3,3-dimethylureido)toluene, and the like.

In addition to the epoxy curing agent, various additives such as a low shrinkage agent, an antioxidant, an internal release agent, a coloring agent, a modifier (for example, a rubber, an elastomer or a thermoplastic resin), a flame retardant, an antimicrobial agent, and the like, may be mixed into the molten resin as necessary.

As in the case of the epoxy curing agent, the additive, which is liquid at the temperature when the molten resin is mixed with the carbon fiber fluff, is preferably mixed into the molten resin before mixing the molten resin and the carbon fiber fluff. Additionally, the additive, which is solid at the temperature when the molten resin is mixed with the carbon fiber fluff, may be mixed with the molten resin before mixing the molten resin with the carbon fiber fluff, or may be mixed at the same time as the mixing of the molten resin and the carbon fiber fluff.

The following is an explanation of the flame retardant that can be added to the molten resin.

Preferred flame retardants include phosphorus-containing flame retardants.

Examples of phosphorus-containing flame retardants include non-halogen phosphoric acid esters such as trimethyl phosphate, triethyl phosphate, tributyl phosphate, trioctyl phosphate, tributoxyethyl phosphate, triphenyl phosphate, tricresyl phosphate, cresyl diphenyl phosphate, octyl diphenyl phosphate, aromatic polyphosphates, and the like.

Other examples of phosphorus-containing flame retardants include halogenated phosphoric acid esters such as tris(chloroethyl)phosphate, tris(dichloropropyl)phosphate, tris(chloropropyl)phosphate, bis(2,3-dibromopropyl)2,3-dichloropropylphosphate, tris(2,3-dibromopropyl)phosphate, bis(chloropropyl)octylphosphate, halogenated alkylpolyphosphate, halogenated alkylpolyphosphonate, and the like.

A further example of a phosphorus-containing flame retardant is a phosphinic acid metal salt. The phosphinic acid metal salts here include not only metal salts of phosphinic acids having no organic groups, but also metal salts of organic phosphinic acids such as diphenylphosphinic acid, monophenylphosphinic acid, dialkylphosphinic acid, monoalkylphosphinic acid, alkylphenylphosphinic acid, and the like as well as metal salts of diphosphinic acid such as methanedi(methylphosphinic acid), benzene-1,4-di(methylphosphinic acid), and the like.

Examples of the dialkylphosphinic acids include dimethylphosphinic acid, ethylmethylphosphinic acid, diethylphosphinic acid, and methyl-n-propylphosphinic acid.

Examples of monoalkylphosphinic acids include methylphosphinic acid, ethylphosphinic acid, and n-propylphosphinic acid.

An example of an alkylphenylphosphinic acid is methylphenylphosphinic acid.

Phosphinic acid metal salts can be, but are not limited to, aluminum salts, zinc salts, calcium salts, and magnesium salts.

Further examples of phosphorus-containing flame retardants include red phosphorus, ammonium polyphosphate, melamine phosphate, guanidine phosphate, guanylurea phosphate, and the like.

In addition to the phosphorus-containing flame retardant, a phosphorus-free flame retardant can be added to the molten resin.

Examples of phosphorus-free flame retardants include melamine compounds such as melamine cyanurate, and the like; nitrogen-based flame retardants such as triazine compounds, guanidine compounds, ammonium phosphate, ammonium carbonate, and the like; hydrated metal compounds such as aluminum hydroxide, magnesium hydroxide, and the like, and organometallic salt flame retardants such as ferrocene, acetylacetone metal complexes, and the like.

In a preferred example, halogen-free materials are selected for the molten resin and all materials including the flame retardant, to be added to the molten resin. Thereby, a halogen-free flame retardant final product CBC is obtained.

The ratio of the weight of the carbon fiber fluff to the total weight of the molten resin, all materials mixed with the molten resin, and the carbon fiber fluff can be 20% or more and less than 30%, 30% or more and less than 40%, 40% or more and less than 50%, 50% or more and less than 60%, 60% or more and less than 70%, or 70% or more and 80% or less. This ratio is approximately equal to the fiber weight content in the final product, CBC. Actually, since the carbon fiber fluff made of virgin carbon fibers contains a sizing agent, the value obtained by multiplying the above ratio by the weight ratio of carbon fibers in the carbon fiber fluff becomes the fiber weight content of CBC.

### (iv) Cooling process

In the cooling process, the carbon fiber bundle formed in the bundling process is cooled to solidify the bundling liquid, i.e., the molten resin, contained in the carbon fiber bundle, thereby completing the CBC. Cooling may be forced cooling or natural cooling.

In one example, the carbon fiber bundle formed in the stirring tank of the agitation mixer can be cooled while being stirred in the stirring tank without being taken out from the stirring tank.

In another example, the carbon fiber bundle formed in the stirring tank of the agitation mixer may be taken out from the stirring tank and cooled at another location. Another location may be, for example, in a disc pelletizer, or in a transport tube or on a conveyor belt.

Ultimately, the temperature of the CBC is usually lowered to room temperature or lower.

The carbon fiber bundle is unstable at a stage before the molten resin contained therein is solidified. When a large amount of the carbon fiber bundles at this stage are stored in a large container, there is a possibility that the carbon fibers may stick to each other near the bottom of the container due to their own weight.

Solidification of the molten resin in the cooling process occurs faster as the solidification temperature of the molten resin is higher. Therefore, the higher the solidification temperature of the molten resin, the faster the carbon fiber bundle becomes stable. From this viewpoint, the solidification temperature of the molten resin is preferably 40°C or higher, more preferably 50°C or higher, and may be 60°C or higher, 70°C or higher, or 80°C or higher.

### 1.2. Method using recycled carbon fiber as starting material

In the method for producing CBC described in 1.1 above, all or part of the virgin carbon fiber as a starting material can be replaced with recycled carbon fiber.

A preferred example of recycled carbon fiber is carbon fiber recovered from offcuts of SMC (sheet molding compound) or scraps of CFRP made by curing SMC. Substantially all of the carbon fibers contained in SMC have the same fiber length, which is usually in the range of 3 mm to 60 mm.

For example, the above-mentioned offcuts or scraps are preferably dry distilled at a temperature of 600°C or higher, and further heated to, for example, 550°C or higher, preferably 600°C or higher, under an oxidizing atmosphere to completely thermally decompose the matrix resin. As a result, the carbon fibers made of recycled carbon fibers, almost all of which have the same fiber length, remain in the form of fluff. Although this recycled carbon fiber has been thermally degraded and has lower strength than virgin carbon fiber, it has sufficient strength to be used as a reinforcing material for FRP.

Another method for recovering carbon fibers from CFRP waste is to decompose the matrix resin using a subcritical or supercritical fluid. The matrix resin is completely removed so that fluffy recycled carbon fibers are obtained. Resin residues that cannot be completely removed by this method may be removed by heat treatment in an oxidizing atmosphere. The recycled carbon fiber obtained by this method is also thermally degraded and therefore has lower strength than virgin carbon fiber.

As yet another method of recovering carbon fiber from CFRP waste materials, it is also possible to use a method including decomposing the matrix resin by microwave heating.

A small amount of carbon, which is a thermal decomposition product of the matrix resin, may remain in the recycled carbon fiber bundles that are extracted from waste SMC or CFRP by thermally decomposing the matrix resin. A carbon fiber bundle in which carbon fiber filaments are bound together by a small amount of residual carbon can be loosened, for example, by stirring in a dry state using an agitation mixer.

Another method for recovering carbon fiber from SMC offcuts is to wash out the uncured matrix resin using a solvent that may be a subcritical or supercritical fluid. According to this method, it is possible to obtain recycled carbon fiber that is not thermally degraded and has strength equivalent to that of virgin carbon fiber.

Recycled carbon fibers recovered by the above method from the offcuts of CFRP made by hardening SMC or SMC are short fibers that usually have a fiber length in the range of 3 mm to 60 mm. This recycled carbon fiber does not require further cutting for use in the production of CBC, and the sizing agent has also been removed. When only such recycled carbon fibers are used as a starting material, after performing the (ii) loosening process as necessary, the above-mentioned (iii) bundling process and (iv) cooling process are performed in the same manner as when virgin carbon fibers are used as a starting material.

Recycled carbon fibers recovered by cutting offcuts of UD prepreg (Uni-Directional prepreg) or woven prepreg, or CFRP scraps made by curing UD prepreg or woven prepreg, so that the carbon fibers contained therein have a length within the range of 3 mm to 60 mm, and then performing the treatments exemplified above, can also be preferably used in the CBC producing method according to the embodiment.

Fibers other than carbon fibers may be mixed in the carbon fiber fluff obtained through recycling. For example, in the carbon fiber fluff recovered from CFRP in which a carbon fiber cloth containing stitches made of glass fibers is used as a reinforcing material, contamination with glass fibers may be observed.

When using recycled carbon fibers as a starting material, mixed fibers other than the carbon fibers may be removed before use, but this is not essential. That is, in the producing method according to the embodiment, the carbon fiber fluff mixed with fibers other than carbon fibers may be used as a starting material.

For example, from the viewpoint of reducing the environmental impact, it is desirable to use the carbon fiber fluff mixed with glass fibers while containing the glass fibers as long as a practical problem dose not arise.

On the other hand, from the viewpoint of stabilizing the quality of CBC, the content of fibers other than carbon fibers in the carbon fiber fluff that is the starting material is preferably less than 10 wt%, more preferably less than 5 wt%, and even more preferably less than 1 wt%.

### 2. Carbon fiber bundle composite

Another embodiment of the present invention is a CBC produced by the producing method described in the above-mentioned 1. section. This CBC consists of a plurality of short carbon fibers forming a bundle and an uncured solid epoxy resin composition.

Due to the formation process in which the short carbon fibers are assembled into a bundle by the action of the bundling liquid, the positions of the tips of the plurality of short carbon fibers are uneven at each end of the bundle. The uncured solid epoxy resin composition contains an epoxy curing agent.

The number of short carbon fibers (the number of filaments) forming the bundle may be, for example, 1,000 to 20,000. All of the short carbon fibers in the bundle may have a fiber length of 60 mm or less, 50 mm or less, 40 mm or less, 30 mm or less, or 20 mm or less.

Since carbon fibers whose fiber length is too short have a low effect as a reinforcing material when used in FRP, most of the short carbon fibers forming the bundle preferably have a fiber length of 3 mm or more, more preferably 5 mm or more, and even more preferably 10 mm.

In order to increase the strength of CFRP molded using the CBC, it is effective to limit the content of carbon fibers that are less than a certain length.

In a preferred example, the CBC contains no carbon fiber having a fiber length of less than 3 mm, or even when such a carbon fiber is contained therein, its content is less than 5 wt% based on the total carbon fibers contained in the CBC.

In a more preferred example, the CBC contains no carbon fiber having a fiber length of less than 5 mm, or even when such a carbon fiber is contained therein, its content is less than 5 wt% based on the total carbon fibers contained in the CBC.

In an even more preferred example, the CBC contains no carbon fiber having a fiber length of less than 10 mm, or even when such a carbon fiber is contained therein, its content is less than 5 wt% based on the total carbon fibers contained in the CBC.

In the case of CBC in which all short carbon fibers forming a bundle have the same fiber length L (mm), the bundle length usually exceeds L (mm).

Depending on the bundle length and the length and number of short carbon fibers contained, the CBC may have spindle shape, needle-like shape, or wire-like shape.

By composing the CBC according to the embodiment only from short carbon fibers having the same fiber length, it is possible to suppress variations in quality between producing lots. In this case, the difference between the maximum and minimum fiber lengths between the short carbon fibers forming the bundle is preferably within 5 mm, more preferably within 4 mm, and even more preferably within 3 mm.

The filament diameter of the short carbon fibers forming the bundle is not particularly limited, but may be within the filament diameter range that PAN-based carbon fibers normally have, for example, within the range of 5 µm to 15 µm.

The uncured solid epoxy resin composition contained in the CBC according to the embodiment contains one or more epoxy resins. Examples of epoxy resin that can be blended include, but are not limited to, glycidyl ether type, glycidyl amine type, glycidyl ester type, and alicyclic type epoxy resins.

An epoxy resin containing an oxazolidone ring may be blended into the uncured solid epoxy resin composition.

Since the uncured solid epoxy resin composition contained in the CBC according to the embodiment is a solidified molten resin used as a bundling liquid during the production of the CBC, the epoxy resin that can be contained in the solid epoxy resin composition is the same as the epoxy resin that can be blended into the molten resin. For the same reason, the components other than the epoxy resin that the solid epoxy resin composition may contain are the same as the various components other than the epoxy resin that can be mixed into the molten resin.

The uncured solid epoxy resin composition contained in the CBC according to the embodiment is solid at least at a temperature within the range of 15 to 25°C (so-called room temperature). Further, it is preferably solid when the temperature is 40°C, and more preferably solid when the temperature is 50°C.

The fiber weight content in the CBC according to the embodiment may be 40 wt% or more and less than 50 wt%, 50 wt% or more and less than 60 wt%, 60 wt% or more and less than 70 wt%, or 70 wt% or more and 80 wt% or less.

All of the carbon fibers included in the CBC according to the embodiment may be carbon fibers that have not been thermally degraded, or some may be carbon fibers that have not been thermally degraded and the remaining carbon fibers may be thermally degraded carbon fibers. It may be good, or it may be all thermally degraded carbon fibers.

A typical example of carbon fiber that has not been thermally degraded is virgin carbon fiber.

A typical example of thermally degraded carbon fibers is recycled carbon fibers recovered from CFRP waste materials, which are thermally degraded during the process of thermally decomposing and removing the matrix resin.

In the CBC according to the embodiment, fibers other than carbon fibers may be mixed in the bundle composed of a plurality of short carbon fibers. Such CBC is obtained, for example, when recycled carbon fibers are used as a starting material. When recycled carbon fibers mixed with glass fibers are used as a starting material, a CBC consisting of a plurality of short carbon fibers bundled together with glass fibers and an uncured solid epoxy resin composition is obtained.

When the fiber bundle contained in the CBC contains fibers other than carbon fibers, the content thereof is preferably less than 10 wt%, more preferably less than 5 wt%, and even more preferably less than 1 wt%.

The CBC according to the embodiment is a prepreg material used for molding CFRP. As a molding method when producing CFRP product using the CBC according to the embodiment, a press molding method is preferably exemplified, but is not limited thereto. For example, a molding method other than the press molding method such as an autoclave molding method can also be used.

### 3. Carbon fiber bundle composite sheet

Using the CBC according to the embodiment, for example, a CBC sheet, which is a sheet-shaped thermosetting molding material, can be produced by sequentially performing the following first to third steps.
First step: Prepare the first protective film and the second protective film.
Second step: Sprinkle the CBC on the first protective film to deposit a CBC layer.
Third step: After covering the CBC layer with the second protective film, the CBC layer is heated and pressurized using a double belt press or roll press to fuse the CBCs together to form a sheet.

As the first protective film and the second protective film, a release paper commonly used in the production of carbon fiber prepreg can be preferably used.

When heating and pressurizing the CBC layer in the third step, the temperature is adjusted so that the solid epoxy resin composition contained in the CBC does not harden and lose fluidity.

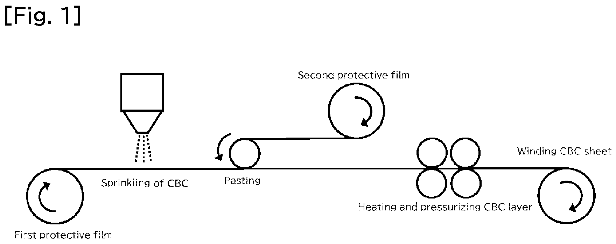

Fig. 1 shows a conceptual diagram of a producing apparatus that can be used to produce a CBC sheet according to the above procedure.

This producing apparatus consists of a section for depositing a CBC layer by sprinkling the CBC on a first protective film unwound from a roll, a section for covering the CBC layer with a second protective film unwound from a roll, a section for heating and pressurizing the CBC layer, and a section for winding up the CBC sheet.

The orientation of the CBC in the CBC layer may be random or biased in one direction. For example, the lower the running speed of the first protective film, the more random the CBC orientation becomes. When the running speed of the first protective film is increased, the CBC tends to be oriented along the running direction.

In one example, the fiber weight content of the CBC sheet can be adjusted by supplementing an uncured epoxy resin during production of the CBC sheet. For this reason, the surface of the first protective film can be coated with an uncured epoxy resin to be supplemented before depositing the CBC layer. Alternatively or additionally, the surface of the second protective film may be coated with an uncured epoxy resin to be supplemented before being applied to the CBC layer.

The basis weight of the CBC sheet can be designed as appropriate depending on the application. The basis weight may be, for example, 300 g/m² or more and less than 500 g/m², 500 g/m² or more and less than 1000 g/m², 1000 g/m² or more and less than 2000 g/m², 2000 g/m² or more and less than 4000 g/m², and 4000 g/m² or more and less than 6000 g/m², 6000 g/m² or more and less than 8000 g/m², or 8000 g/m² or more and less than 10000 g/m².

The thickness of the CBC sheet can be designed to be, for example, 0.5 mm or more and less than 1.5 mm, 1.5 mm or more and less than 3 mm, or 3 mm or more and 5 mm or less, but is not limited thereto.

The CBC sheet according to the embodiment is a prepreg material used for molding CFRP. As a molding method when producing a CFRP product using the CBC sheet according to the embodiment, a press molding method is preferably exemplified, but is not limited to this, and, for example, molding methods other than press molding methods such as an autoclave molding method also may be used.

### 4. Summary of Embodiments

Embodiments of the present invention include the following. However, they are not limited to these.

[Embodiment 1] A method for producing a carbon fiber bundle composite comprising: mixing carbon fiber fluff made of short carbon fibers and a molten resin containing an epoxy resin component to obtain a carbon fiber bundle containing the molten resin, solidifying the molten resin contained in the carbon fiber bundle, and mixing at least one type of epoxy curing agent into the molten resin.
[Embodiment 2] The producing method according to embodiment 1, wherein an agitation mixer is used for the mixing.
[Embodiment 3] The producing method according to embodiment 1 or 2, wherein the molten resin is solidified by cooling the carbon fiber bundle containing the molten resin in a disk pelletizer.
[Embodiment 4] The producing method according to embodiment 1 or 2, wherein the molten resin is solidified by cooling the carbon fiber bundle containing the molten resin in a transport pipe or on a conveyor belt.
[Embodiment 5] The producing method according to any one of embodiments 1 to 4, wherein at least a portion of the at least one epoxy curing agent is mixed into the molten resin before mixing the molten resin and the carbon fiber fluff, or at the same time as mixing the molten resin and the carbon fiber fluff.
[Embodiment 6] The producing method according to any one of embodiments 1 to 5, wherein the molten resin is a melt of a resin that is solid at a temperature within the range of at least 15 to 25°C.
[Embodiment 7] The producing method according to any one of embodiments 1 to 6, wherein the molten resin is a melt of a resin that is solid at 40°C.
[Embodiment 8] The producing method according to any one of embodiments 1 to 7, wherein a flame retardant is mixed into the molten resin.
[Embodiment 9] The producing method according to any one of embodiments 1 to 8, wherein all of the carbon fibers contained in the carbon fiber fluff have a fiber length of 60 mm or less, 50 mm or less, 40 mm or less, 30 mm or less, or 20 mm or less.
[Embodiment 10] The producing method according to any one of embodiments 1 to 9, wherein the carbon fiber fluff contains no carbon fiber having a fiber length of less than 3 mm, or even when such a carbon fiber is contained therein, its content is less than 5 wt% based on the total carbon fibers contained in the carbon fiber fluff.
[Embodiment 11] The producing method according to any one of embodiments 1 to 9, wherein the carbon fiber fluff contains no carbon fiber having a fiber length of less than 5 mm, or even when such a carbon fiber is contained therein, its content is less than 5 wt% based on the total carbon fibers contained in the carbon fiber fluff.
[Embodiment 12] The producing method according to any one of embodiments 1 to 9, wherein the carbon fiber fluff contains no carbon fiber having a fiber length of less than 10 mm, or even when such a carbon fiber is contained therein, its content is less than 5 wt% based on the total carbon fibers contained in the carbon fiber fluff.
[Embodiment 13] The producing method according to any one of embodiments 1 to 12, wherein at least some of the carbon fibers contained in the carbon fiber fluff are provided by loosening chopped carbon fiber bundles.
[Embodiment 14] The producing method according to any one of embodiments 1 to 8, wherein all of the carbon fibers contained in the carbon fiber fluff are provided by loosening chopped carbon fiber bundles.
[Embodiment 15] The producing method according to embodiment 14, wherein the chopped carbon fiber bundle has a fiber length of 3 mm or more, 5 mm or more, or 10 mm or more.
[Embodiment 16] The producing method according to embodiment 14 or 15, wherein the chopped carbon fiber bundle has a fiber length of 60 mm or less, 50 mm or less, 40 mm or less, 30 mm or less, or 20 mm or less.
[Embodiment 17] The producing method according to any one of embodiments 1 to 16, wherein all of the short carbon fibers are carbon fibers that have not been thermally degraded.
[Embodiment 18] The producing method according to any one of embodiments 1 to 13, wherein the short carbon fibers include thermally degraded carbon fibers.
[Embodiment 19] The producing method according to any one of embodiments 1 to 13 and 18, wherein fibers other than carbon fibers are mixed in the carbon fiber fluff, and the fibers other than carbon fibers may be glass fibers.
[Embodiment 20] The producing method according to any one of embodiments 1 to 19, wherein the carbon fiber bundle containing the molten resin is an isolated fiber bundle.
[Embodiment 21] A carbon fiber bundle composite produced by the producing method according to any one of embodiments 1 to 20.
[Embodiment 22] A carbon fiber bundle composite comprising a plurality of short carbon fibers forming a bundle and an uncured solid epoxy resin composition,
   wherein the positions of the tips of the plurality of short carbon fibers are uneven at each end of the bundle, and the uncured solid epoxy resin composition contains at least one type of epoxy curing agent.
[Embodiment 23] The carbon fiber bundle composite according to embodiment 22, wherein the uncured solid epoxy resin composition is solid at a temperature within the range of at least 15 to 25°C.
[Embodiment 24] The carbon fiber bundle composite according to embodiment 22, wherein the uncured solid epoxy resin composition is solid at 40°C.
[Embodiment 25] The carbon fiber bundle composite according to any one of embodiments 22 to 24, wherein the bundle is isolated.
[Embodiment 26] The carbon fiber bundle composite according to embodiment 25, wherein the composite has a needle-like or wire-like shape.
[Embodiment 27] The carbon fiber bundle composite according to any one of embodiments 22 to 26, wherein all of the plurality of short carbon fibers have a fiber length of 60 mm or less, 50 mm or less, 40 mm or less, 30 mm or less, or 20 mm or less.
[Embodiment 28] The carbon fiber bundle composite according to any one of embodiments 22 to 27, having a bundle length of 3 mm or more, 5 mm or more, or 10 mm or more.
[Embodiment 29] The carbon fiber bundle composite according to any one of embodiments 22 to 28, wherein the carbon fiber bundle composite contains no carbon fiber having a fiber length of less than 3 mm, or even when such a carbon fiber is contained therein, its content is less than 5 wt% based on the total carbon fibers contained in the carbon fiber bundle composite.
[Embodiment 30] The carbon fiber bundle composite according to any one of embodiments 22 to 27, wherein the carbon fiber bundle has a bundle length of 5 mm or more, or 10 mm or more, and contains no carbon fiber having a fiber length of less than 5 mm, or even when such a carbon fiber is contained therein, its content is less than 5 wt% based on the total carbon fibers contained in the carbon fiber bundle composite.
[Embodiment 31] The carbon fiber bundle composite according to any one of embodiments 22 to 27, wherein the carbon fiber bundle has a bundle length of 10 mm or more, and contains no carbon fiber having a fiber length of less than10 mm, or even when such a carbon fiber is contained therein, its content is less than 5 wt% based on the total carbon fibers contained in the carbon fiber bundle composite.
[Embodiment 32] The carbon fiber bundle composite according to any one of embodiments 22 to 31, wherein the difference between the maximum and minimum fiber lengths of the plurality of short carbon fibers is within 5 mm.
[Embodiment 33] The carbon fiber bundle composite according to embodiment 25, wherein the composite has a spindle shape.
[Embodiment 34] The carbon fiber bundle composite according to any one of embodiments 22 to 33, wherein the at least one type of epoxy curing agent includes a latent curing agent.
[Embodiment 35] The carbon fiber bundle composite according to any one of embodiments 22 to 34, wherein the fiber weight content is 40 wt% or more and less than 50 wt%, 50 wt% or more and less than 60 wt%, 60 wt% or more and less than 70 wt%, or 70 wt% or more and 80 wt% or less.
[Embodiment 36] The carbon fiber bundle composite according to any one of embodiments 22 to 35, wherein all of the plurality of short carbon fibers are carbon fibers that have not been thermally degraded.
[Embodiment 37] The carbon fiber bundle composite according to any one of embodiments 22 to 35, wherein the plurality of short carbon fibers include thermally degraded carbon fibers.
[Embodiment 38] The carbon fiber bundle composite according to any one of embodiments 22 to 35 and 37, wherein the plurality of short carbon fibers form the bundle together with fibers other than carbon fibers, and the fibers other than carbon fibers may be glass fibers.
[Embodiment 39] A carbon fiber bundle composite sheet obtained by fusing together a plurality of carbon fiber bundle composites according to any one of embodiments 21 to 38.
[Embodiment 40] A carbon fiber bundle composite sheet comprising a plurality of carbon fiber bundle composites according to any one of embodiments 21 to 38, wherein each of the carbon fiber bundle composites is fused to at least one other carbon fiber bundle composite.
[Embodiment 41] A method for producing a carbon fiber bundle composite sheet, comprising fusing together a plurality of carbon fiber bundle composites according to any one of embodiments 21 to 38.
[Embodiment 42] The producing method according to embodiment 41, wherein the carbon fiber bundle composite is supplemented with an uncured solid epoxy resin composition during the fusion.
[Embodiment 43] The producing method according to any one of embodiments 1 to 20, wherein the molten resin is a melt of an epoxy resin having a melting point.
[Embodiment 44] A carbon fiber bundle composite produced by the producing method according to embodiment 43.
[Embodiment 45] The carbon fiber bundle composite according to any one of embodiments 22 to 38, wherein the uncured solid epoxy resin composition has a melting point.
[Embodiment 46] A carbon fiber bundle composite sheet made by fusing together a plurality of carbon fiber bundle composites according to embodiment 45.
[Embodiment 47] A carbon fiber bundle composite sheet comprising a plurality of carbon fiber bundle composites according to embodiment 45, wherein each of the carbon fiber bundle composites is fused to at least one other carbon fiber bundle composite.
[Embodiment 48] A method for producing a carbon fiber bundle composite sheet, comprising fusing together a plurality of carbon fiber bundle composites according to embodiment 45.
[Embodiment 49] The producing method according to embodiment 48, wherein the carbon fiber bundle composite is supplemented with an uncured epoxy resin during the fusion.

### 5. Experimental result

The results of experiments conducted by the present inventors are described below.

The materials used in each experiment are as follows.
Carbon fiber: Fluffy carbon fiber obtained by drying watersized chopped carbon fiber having a fiber length of 6 mm at 120°C for 1 hour and then loosening it by hand was used.
Epoxy resin: YX4000 manufactured by Mitsubishi Chemical Corporation, which is a biphenyl-type epoxy resin having a nominal melting point of 105°C, was used. The viscosity of this epoxy resin at 120°C was measured with a B-type rotational viscometer (LVDV-1 manufactured by Brookfield, spindle S61, 50 rpm) and found to be 0.048 Pa·s.
Epoxy curing agent: Powdered epoxy curing agent DICY7 manufactured by Mitsubishi Chemical Corporation was used. The melting point of dicyandiamide, a component of this epoxy curing agent, is about 210°C.

### [Experiment 1]

After 10 g of the epoxy resin powder and 0.3 g of the epoxy curing agent were put in a container (polypropylene bottle with a lid) and they were mixed, the container was placed in a constant temperature bath and maintained at 120°C for 10 minutes to obtain a molten epoxy resin in which the epoxy curing agent was dispersed. Immediately after taking out the container from the constant temperature bath, 23 g of the carbon fiber was put into the container. The molten epoxy resin and carbon fibers were then mixed together by shaking the container by hand.

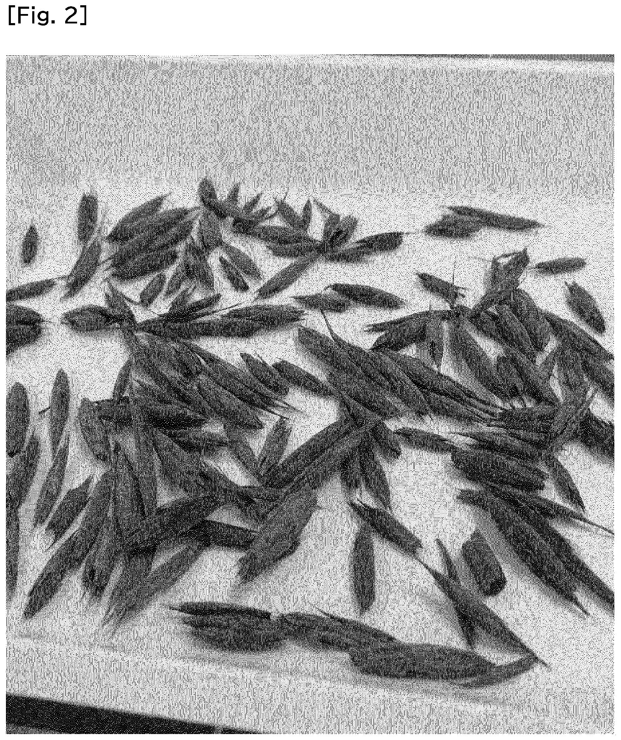

When the temperature decreased while the container was being shaken and the epoxy resin solidified, the container was again placed in a constant temperature bath at 120°C and held for 10 minutes to melt the epoxy resin. The container was then shaken outside the constant temperature bath until the epoxy resin solidified again. After repeating this operation four times, all the fluffy carbon fibers were mixed with the epoxy resin, and as shown in Fig. 2, a carbon fiber bundle composite having a shape close to a spindle shape was obtained. The length of the carbon fiber bundle composite was generally within the range of 1 to 3 cm.

### [Experiment 2]

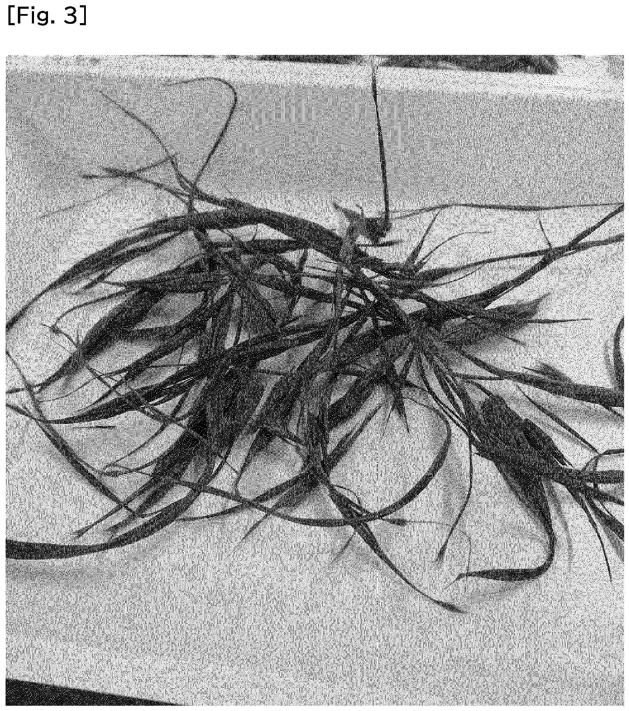

The molten epoxy resin in which the epoxy curing agent was dispersed and the carbon fibers were mixed in the same manner as in Experiment 1 except that the amount of the carbon fibers was changed from 23 g to 10 g. The operation that was repeated four times in Experiment 1, was repeated twice, and all the fluffy carbon fibers were mixed with the epoxy resin, and a wire-like carbon fiber bundle composite was obtained as shown in Fig. 3. The length of the carbon fiber bundle composite was generally within the range of 4 to 10 cm.

### [Experiment 3]

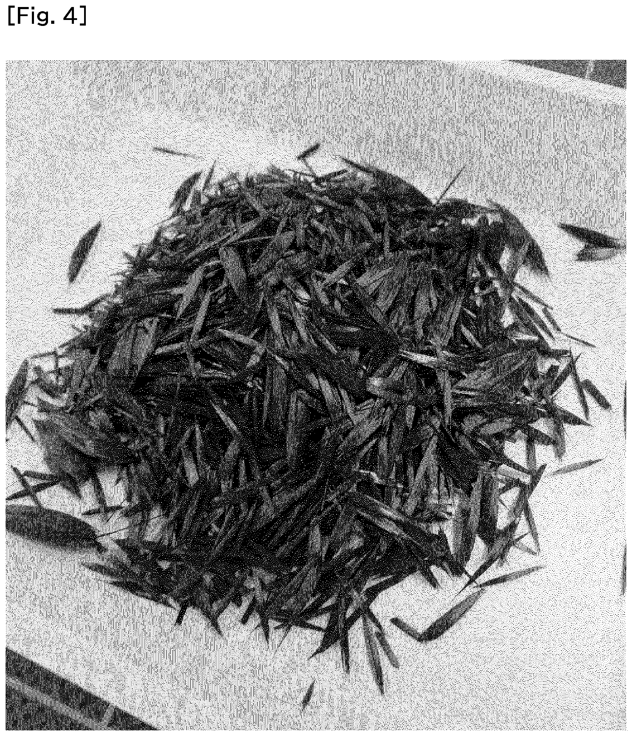

The molten epoxy resin in which the epoxy curing agent was dispersed and the carbon fibers were mixed in the same manner as in Experiment 1 except that the amount of the carbon fibers was changed from 23 g to 30 g. The operation that was repeated four times in Experiment 1, was repeated 10 times, and all the fluffy carbon fibers were mixed with the epoxy resin, and a needle-like carbon fiber bundle composite was obtained as shown in Fig. 4. The length of the carbon fiber bundle composite was generally within the range of 1 to 2 cm.

### [Experiment 4]

15 g of the spindle-shaped carbon fiber bundle composite obtained in Experiment 1 was pressed for 10 minutes at a temperature of 120°C and a pressure of 8 MPa using a press mold consisting of a cavity and a core to form a carbon fiber bundle composite sheet having a length and width of 100 mm x 60 mm and a thickness of 1.8 mm.

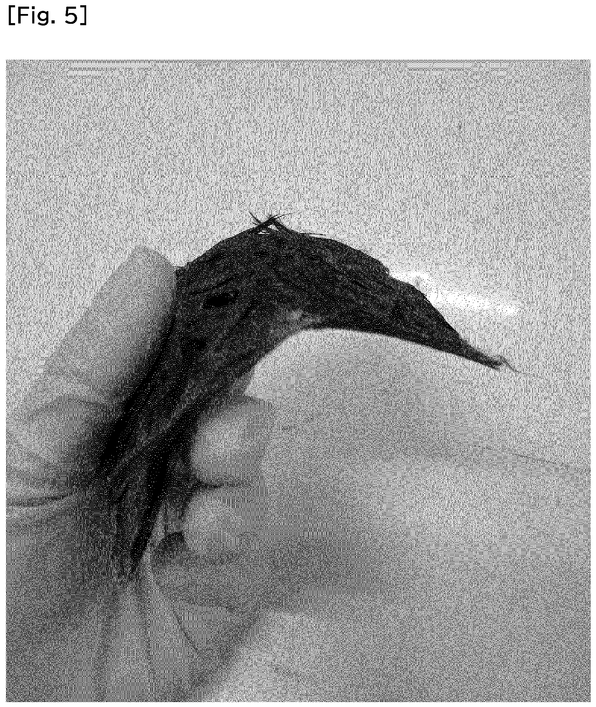

Fig. 5 shows the appearance of the obtained carbon fiber bundle composite sheet. This carbon fiber bundle composite sheet had flexibility immediately after being taken out from the press mold at a temperature of 120°C, but its flexibility was lost when the temperature decreased to room temperature.

### [Experiment 5]

The carbon fiber bundle composite sheet obtained in Experiment 4 was sandwiched between two flat metal plates and pressed for 120 minutes at a temperature of 180°C and a pressure of 8 MPa to mold a CFRP board.

The obtained CFRP board had a length and width of 105 mm x 70 mm and a thickness of 1.5 mm. This indicates that the carbon fiber composite sheet slightly flowed during molding.

The CFRP board did not soften even when heated to 120°C, indicating that the epoxy resin contained in the CFRP board had been hardened.

Although the present invention has been described above with reference to specific embodiments, each embodiment is presented as an example and does not limit the scope of the present invention. Each embodiment described in this specification can be variously modified within the scope where the effects of the invention can be achieved, and the features described in other embodiments may be combined within the scope of practicability.

The present application is based on Japanese Patent Application No. 2022-33126 filed on March 4, 2022 and Japanese Patent Application No. 2022-180699 filed on November 11, 2022, the entire contents of which are incorporated herein by reference.

### Industrial Availability

The CBC and CBC sheets according to the embodiments can be preferably used when producing various CFRP parts for automobiles, motorcycles, bicycles, ships, railroad cars, manned aircraft, unmanned aircraft and other transportation equipment, sporting goods, leisure goods, home appliances, agricultural equipment, construction materials, and the like.

## Claims

1. A method for producing a carbon fiber bundle composite comprising:
mixing carbon fiber fluff made of short carbon fibers and a molten resin containing an epoxy resin component to obtain a carbon fiber bundle containing the molten resin,
solidifying the molten resin contained in the carbon fiber bundle, and
mixing at least one type of epoxy curing agent into the molten resin.

2. The producing method according to claim 1, wherein an agitation mixer is used for the mixing.

3. The producing method according to claim 1 or 2, wherein the molten resin is solidified by cooling the carbon fiber bundle containing the molten resin in a disk pelletizer.

4. The producing method according to claim 1 or 2, wherein the molten resin is solidified by cooling the carbon fiber bundle containing the molten resin in a transport pipe or on a conveyor belt.

5. The producing method according to any one of claims 1 to 4, wherein at least a portion of the at least one epoxy curing agent is mixed into the molten resin before mixing the molten resin and the carbon fiber fluff, or at the same time as mixing the molten resin and the carbon fiber fluff.

6. The producing method according to any one of claims 1 to 5, wherein the molten resin is a melt of a resin that is solid at a temperature within the range of at least 15 to 25°C.

7. The producing method according to any one of claims 1 to 6, wherein the molten resin is a melt of a resin that is solid at 40°C.

8. The producing method according to any one of claims 1 to 7, wherein a flame retardant is mixed into the molten resin.

9. The producing method according to any one of claims 1 to 8, wherein all of the carbon fibers contained in the carbon fiber fluff have a fiber length of 60 mm or less, 50 mm or less, 40 mm or less, 30 mm or less, or 20 mm or less.

10. The producing method according to any one of claims 1 to 9, wherein the carbon fiber fluff contains no carbon fiber having a fiber length of less than 3 mm, or even when such a carbon fiber is contained therein, its content is less than 5 wt% based on the total carbon fibers contained in the carbon fiber fluff.

11. The producing method according to any one of claims 1 to 9, wherein the carbon fiber fluff contains no carbon fiber having a fiber length of less than 5 mm, or even when such a carbon fiber is contained therein, its content is less than 5 wt% based on the total carbon fibers contained in the carbon fiber fluff.

12. The producing method according to any one of claims 1 to 9, wherein the carbon fiber fluff contains no carbon fiber having a fiber length of less than 10 mm, or even when such a carbon fiber is contained therein, its content is less than 5 wt% based on the total carbon fibers contained in the carbon fiber fluff.

13. The producing method according to any one of claims 1 to 12, wherein at least some of the carbon fibers contained in the carbon fiber fluff are provided by loosening chopped carbon fiber bundles.

14. The producing method according to any one of claims 1 to 8, wherein all of the carbon fibers contained in the carbon fiber fluff are provided by loosening chopped carbon fiber bundles.

15. The producing method according to claim 14, wherein the chopped carbon fiber bundle has a fiber length of 3 mm or more, 5 mm or more, or 10 mm or more.

16. The producing method according to claim 14 or 15, wherein the chopped carbon fiber bundle has a fiber length of 60 mm or less, 50 mm or less, 40 mm or less, 30 mm or less, or 20 mm or less.

17. The producing method according to any one of claims 1 to 16, wherein all of the short carbon fibers are carbon fibers that have not been thermally degraded.

18. The producing method according to any one of claims 1 to 13, wherein the short carbon fibers include thermally degraded carbon fibers.

19. The producing method according to any one of claims 1 to 13 and 18, wherein fibers other than carbon fibers are mixed in the carbon fiber fluff, and the fibers other than carbon fibers may be glass fibers.

20. The producing method according to any one of claims 1 to 19, wherein the carbon fiber bundle containing the molten resin is an isolated fiber bundle.

21. A carbon fiber bundle composite produced by the producing method according to any one of claims 1 to 20.

22. A carbon fiber bundle composite comprising a plurality of short carbon fibers forming a bundle and an uncured solid epoxy resin composition,
wherein the positions of the tips of the plurality of short carbon fibers are uneven at each end of the bundle, and the uncured solid epoxy resin composition contains at least one type of epoxy curing agent.

23. The carbon fiber bundle composite according to claim 22, wherein the uncured solid epoxy resin composition is solid at a temperature within the range of at least 15 to 25°C.

24. The carbon fiber bundle composite according to claim 22, wherein the uncured solid epoxy resin composition is solid at 40°C.

25. The carbon fiber bundle composite according to any one of claims 22 to 24, wherein the bundle is isolated.

26. The carbon fiber bundle composite according to claim 25, wherein the composite has a needle-like or wire-like shape.

27. The carbon fiber bundle composite according to any one of claims 22 to 26, wherein all of the plurality of short carbon fibers have a fiber length of 60 mm or less, 50 mm or less, 40 mm or less, 30 mm or less, or 20 mm or less.

28. The carbon fiber bundle composite according to any one of claims 22 to 27, having a bundle length of 3 mm or more, 5 mm or more, or 10 mm or more.

29. The carbon fiber bundle composite according to any one of claims 22 to 28, wherein the carbon fiber bundle composite contains no carbon fiber having a fiber length of less than 3 mm, or even when such a carbon fiber is contained therein, its content is less than 5 wt% based on the total carbon fibers contained in the carbon fiber bundle composite.

30. The carbon fiber bundle composite according to any one of claims 22 to 27, wherein the carbon fiber bundle has a bundle length of 5 mm or more, or 10 mm or more, and contains no carbon fiber having a fiber length of less than 5 mm, or even when such a carbon fiber is contained therein, its content is less than 5 wt% based on the total carbon fibers contained in the carbon fiber bundle composite.

31. The carbon fiber bundle composite according to any one of claims 22 to 27, wherein the carbon fiber bundle has a bundle length of 10 mm or more, and contains no carbon fiber having a fiber length of less than10 mm, or even when such a carbon fiber is contained therein, its content is less than 5 wt% based on the total carbon fibers contained in the carbon fiber bundle composite.

32. The carbon fiber bundle composite according to any one of claims 22 to 31, wherein the difference between the maximum and minimum fiber lengths of the plurality of short carbon fibers is within 5 mm.

33. The carbon fiber bundle composite according to claim 25, wherein the composite has a spindle shape.

34. The carbon fiber bundle composite according to any one of claims 22 to 33, wherein the at least one type of epoxy curing agent includes a latent curing agent.

35. The carbon fiber bundle composite according to any one of claims 22 to 34, wherein the fiber weight content is 40 wt% or more and less than 50 wt%, 50 wt% or more and less than 60 wt%, 60 wt% or more and less than 70 wt%, or 70 wt% or more and 80 wt% or less.

36. The carbon fiber bundle composite according to any one of claims 22 to 35, wherein all of the plurality of short carbon fibers are carbon fibers that have not been thermally degraded.

37. The carbon fiber bundle composite according to any one of claims 22 to 35, wherein the plurality of short carbon fibers include thermally degraded carbon fibers.

38. The carbon fiber bundle composite according to any one of claims 22 to 35 and 37, wherein the plurality of short carbon fibers form the bundle together with fibers other than carbon fibers, and the fibers other than carbon fibers may be glass fibers.

39. A carbon fiber bundle composite sheet obtained by fusing together a plurality of carbon fiber bundle composites according to any one of claims 21 to 38.

40. A carbon fiber bundle composite sheet comprising a plurality of carbon fiber bundle composites according to any one of claims 21 to 38, wherein each of the carbon fiber bundle composites is fused to at least one other carbon fiber bundle composite.

41. A method for producing a carbon fiber bundle composite sheet, comprising fusing together a plurality of carbon fiber bundle composites according to any one of claims 21 to 38.

42. The producing method according to claim 41, wherein the carbon fiber bundle composite is supplemented with an uncured solid epoxy resin composition during the fusion.

43. The producing method according to any one of claims 1 to 20, wherein the molten resin is a melt of an epoxy resin having a melting point.

44. A carbon fiber bundle composite produced by the producing method according to claim 43.

45. The carbon fiber bundle composite according to any one of claims 22 to 38, wherein the uncured solid epoxy resin composition has a melting point.

46. A carbon fiber bundle composite sheet made by fusing together a plurality of carbon fiber bundle composites according to claim 45.

47. A carbon fiber bundle composite sheet comprising a plurality of carbon fiber bundle composites according to claim 45, wherein each of the carbon fiber bundle composites is fused to at least one other carbon fiber bundle composite.

48. A method for producing a carbon fiber bundle composite sheet, comprising fusing together a plurality of carbon fiber bundle composites according to claim 45.

49. The producing method according to claim 48, wherein the carbon fiber bundle composite is supplemented with an uncured epoxy resin during the fusion.
